(19)

**Europäisches Patentamt**
**European Patent Office**
**Office européen des brevets**

(11) **EP 4 271 755 B1**

(12) **EUROPEAN PATENT SPECIFICATION**

(45) Date of publication and mention
of the grant of the patent:
**03.06.2026   Bulletin 2026/23**

(21) Application number: **21830694.2**

(22) Date of filing: **16.12.2021**

(51) International Patent Classification (IPC):
**C08L 69/00** *(2006.01)*      **C08L 67/02** *(2006.01)*
**C08K 3/34** *(2006.01)*      **C08K 5/00** *(2006.01)*

(52) Cooperative Patent Classification (CPC):
(C-Sets available)
**C08L 69/00; C08L 67/02;** Y02W 30/62      (Cont.)

(86) International application number:
**PCT/EP2021/086190**

(87) International publication number:
**WO 2022/144187 (07.07.2022 Gazette 2022/27)**

(54) **HEAT RESISTANT AROMATIC POLYCARBONATE - POLYESTER COMPOSITION**

HITZEBESTÄNDIGE AROMATISCHE POLYCARBONAT-POLYESTER-ZUSAMMENSETZUNG

COMPOSITION DE POLYCARBONATE-POLYESTER AROMATIQUE RÉSISTANT À LA CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **04.01.2021   EP 21150075**

(43) Date of publication of application:
**08.11.2023   Bulletin 2023/45**

(73) Proprietor: **SABIC Global Technologies B.V.
4612 PX Bergen op Zoom (NL)**

(72) Inventors:
• **JHA, Roshan Kumar
6160 GA Geleen (NL)**

• **GANGULY, Anirban
6160 GA Geleen (NL)**
• **AL-FARHOOD, Bander
6160 GA Geleen (NL)**
• **MITRA, Susanta
6160 GA Geleen (NL)**

(74) Representative: **Sabic Intellectual Property Group
Sabic Intellectual Property Department
P.O. Box 3008
6160 GA Geleen (NL)**

(56) References cited:
**WO-A1-01/34703      US-A1- 2006 148 984
US-B2- 8 969 433**

EP 4 271 755 B1

(52) Cooperative Patent Classification (CPC): (Cont.)

C-Sets
**C08L 69/00, C08K 3/34, C08L 67/02;**
**C08L 69/00, C08K 5/0083, C08L 67/02;**
**C08L 69/00, C08L 67/02**

**Description**

The present invention relates to a composition comprising polycarbonate and polyester. The present invention further relates to an article comprising or consisting of such a composition.

Compositions comprising a polycarbonate and polyester have excellent appearance, mechanical properties, dimensional stability, and chemical resistance, and are widely used in various fields. Particularly, a composition composed of polycarbonate (PC) and poly(ethylene terephthalate) (PET) has characteristics of imparting the chemical resistance of poly(ethylene terephthalate) to the excellent impact resistance, mechanical property, and dimensional stability of polycarbonate. These compositions are useful in fields such as interior and exterior parts in automobiles specifically.

US 2012/129989 discloses a thermoplastic resin composition, comprising (A) about 100 parts by weight of a base resin including (A-1) about 55 to about 80 wt% of a polycarbonate resin and (A-2) about 20 to about 45 wt% of a polyester resin; (B) about 1 to about 10 parts by weight of a styrene-based polymer; (C) about 1 to about 20 parts by weight of an impact reinforcing agent; and (D) about 0.01 to about 5 parts by weight of a phenol-based antioxidant, wherein the amount of (B), (C), and (D) are each based on about 100 parts by weight of the base resin.

KR101772757B1 relates to a polycarbonate / polyester alloy resin composition, and more particularly to a polycarbonate / polyester resin composition having improved thermal stability.

CN107488342B discloses a polycarbonate and polyethylene glycol terephthalate composite material with high thermal stability and a preparation method thereof.

WO 01/34703 discloses compositions which are based on shock-resistance-modified polyethyleneterephthalate/ polycarbonate blends and which contain a mineral filler in the form of talc.

US 8,969,433 discloses a thermoplastic composition comprising, based on the total weight of the thermoplastic composition: (a) 30-60 percent of one or more polycarbonates; (b) 10-40 percent of one or more polyesters; (c) 0-30 percent of one or more impact modifiers; (d) 5-35 percent of talc that is surface treated with a combination of 85 to 90 weight percent cetyl dimethicone and 10 to 15 percent 1-hexadecane, wherein the talc is characterized by (i) a mean particle diameter of 1.8 $\mu$m; (ii) a Hegman fineness on grind value of 7; (iii) a surface area of 14 m2/g; and a specific gravity of 2.8; (iv) an average moisture of <0.5 weight percent; and (v) a bulk density of 40 lbs/ft3.

PET is a well-known material, used for a variety of applications including in particular bottles, such as for carbonated and non-carbonated soft drinks, fibers, packaging, household and consumer products. Commercially available PET typically contains an amount of isophthalic acid moieties. The present inventors surprisingly found that such PET, when used in PC/PET compositions, leads to less favorable heat resistance properties.

It is, therefore, an object of the invention to provide for a composition comprising PC and PET that has improved heat resistance properties such as an improved Vicat softening point.

To that extent the present inventors have surprisingly found that a composition comprising polycarbonate and polyester, wherein said polyester comprises poly(ethylene terephthalate) that is substantially free of isophthalic acid moieties demonstrates a higher heat resistance compared to an otherwise identical composition wherein the poly(ethylene terephthalate) component contains isophthalic acid moieties. Without willing to be bound to it the present inventors believe that the absence of isophthalic acid allows for faster crystallization and accordingly a higher overall crystallinity of the polyester phase. This makes it suitable for injection-molding applications where a faster crystallization is required.

Accordingly the present invention relates to a composition comprising polycarbonate and polyester, wherein said polyester comprises poly(ethylene terephthalate) that is substantially free of isophthalic acid moieties. In that regards it is noted that the term substantially free means that the poly(ethylene terephthalate) contains at most 0.01 wt.%, preferably at most 0.001 wt.%, more preferably 0.0001 wt.% of isophthalic acid moieties. Most preferably the poly(ethylene terephthalate) is free from isophthalic acid moieties.

More in particular the present invention relates to a composition comprising polycarbonate and polyester, wherein said polyester comprises poly(ethylene terephthalate) that is substantially free of isophthalic acid moieties and wherein the composition has a Vicat softening point, as determined by ISO-306 B120 at a load of 50N and a speed of 120°C/hr that is higher than the Vicat softening point of an otherwise identical composition wherein the poly(ethylene terephthalate) contains isophthalic acid moieties.

By application of the invention, the foregoing object is met, at least in part.

It is preferred that the composition comprises 20 - 80 wt.% polycarbonate and 80 - 20 wt.% polyester, based on the weight of the composition. The total of all components including the polycarbonate, the polyester and optional further components is 100 wt.%. Preferably the amount of polycarbonate is from 20 - 80 wt.% and the amount of polyester is from 80 - 20 wt.% based on the combined weight of the polyester and the polycarbonate.

Polycarbonate

Polycarbonate is a well-known material and generally exhibits good mechanical and optical properties. Typical applications include optical media carriers, glazing, extruded sheets, lenses and water bottles. Polycarbonates are generally manufactured using two different technologies. In a first technology, known as the interfacial technology or interfacial process, phosgene is reacted with bisphenol A (BPA) in a liquid phase. Another well-known technology for the manufacture of polycarbonate is the so-called melt technology, sometimes also referred to as melt transesterification or melt polycondensation technology. In the melt technology, or melt process, a bisphenol, typically BPA, is reacted with a carbonate, typically diphenyl carbonate (DPC), in the melt phase. A polycarbonate obtained by the melt transesterification process is known to be structurally different from polycarbonate obtained by the interfacial process. In that respect it is noted that in particular the so called "melt polycarbonate" typically has a minimum amount of Fries branching, which is generally absent in "interfacial polycarbonate". Apart from that melt polycarbonate typically has a higher number of phenolic hydroxy end groups while polycarbonate obtained by the interfacial process is typically end-capped and has at most 150 ppm, preferably at most 50 ppm, more preferably at most 10 ppm of phenol hydroxyl end-groups.

In accordance with the invention, it is preferred that the polycarbonate comprises bisphenol A polycarbonate. More preferably the polycarbonate of the invention disclosed herein comprises at least 50 wt.%, preferably at least 75 wt.%, more preferably at least 95 wt.%, even more preferably at least 99 wt.% of bisphenol A polycarbonate based on the total amount of polycarbonate. Accordingly, it is preferred that the polycarbonate in the composition essentially consists or consists of bisphenol A polycarbonate

It is preferred that the polycarbonate has a weight average molecular weight of 15,000 to 60,000 g/mol, such as from 20,000 to 35,000 g/mol, as determined using gel permeation chromatography with polycarbonate standards.

The polycarbonate may be a mixture of polycarbonates, preferably a mixture of bisphenol A polycarbonates. The weight average molecular weight of such a mixture is preferably from 15,000 to 60,000 g/mol, such as from 20,000 to 35,000 g/mol, as determined using gel permeation chromatography with polycarbonate standards.

Polyester

The polyester of the composition disclosed herein comprises, essentially consists of or consists of PET that is substantially free of isophthalic acid moieties. The PET may be a mixture of two or more different poly(ethylene terephthalate)s, for example a mixture of PETs with mutually different intrinsic viscosities. The PET may also be a mixture of two or more different poly(ethylene terephthalate)s wherein one poly(ethylene terephthalate) is free of isophthalic acid moieties and one poly(ethylene terephthalate) contains isophthalic acid moieties. The polyester may further comprise recycled poly(ethylene terephthalate) optionally containing isophthalic acid moieties.

Polyesters like poly(ethylene terephthalate) are known to a skilled person per se.

Virgin PET can be prepared by direct polyesterification of terephthalic acid with 1,2-ethane diol (ethylene glycol), usually with the help of a strong acid catalyst. Isophthalic acid (IPA) is generally used as a comonomer for making bottle grade PET, where it disturbs the regularity of structure and influences crystallization. Such PET allows for the manufacture of PET bottles that combine good mechanical properties, transparency and gas-diffusion barrier properties. IPA modified PET is also used commercially for the manufacture of fibers and filaments by means of a spinning process. Typically the amount of IPA content in IPA modified PET is from 0.1 to 5 wt. %, preferably from 0.5 to 3 wt. %, more preferably from 1 to 2.5 wt. %.

The present inventors found that the slower crystallization rate resulting from the presence of IPA moieties leads to a lower heat resistance in compositions comprising a blend of polycarbonate and poly(ethylene terephthalate).

In accordance with the invention, the polyester of the composition disclosed herein comprises, essentially consists of or consists of poly(ethylene terephthalate) that is substantially free of isophthalic acid moieties. The polycarbonate is preferably present in an amount of from 20 - 80 wt. % and the polyester component is present in an amount of from 80 - 20 wt. % based on the weight of the composition and wherein the combined weight percent value of all components is 100 wt.%. It is preferred that the PET has an intrinsic viscosity of 0.4 to about 2.0 dl/g as measured in a 3:2 weight to weight mixture of phenol:1,2-dichlorobenzene at 25°C. Preferably, the intrinsic viscosity is from 0.8 - 1.6 dl/g.

In the context of the present invention the term "substantially free of isophthalic acid moieties" means that the PET contains at most 0.01 wt.%, preferably at most 0.001 wt.%, more preferably at most 0.0001 wt.% of isophthalic acid moieties. Thus, ideally the term substantially free means that no isophtalic acid moieties are present in the polymer.

Poly(ethylene terephthalate) that is substantially free from isophthalic acid moieties is to be understood as a PET homopolymer that does not contain moieties other than terephthalic acid moieties along the polymer chain. For the avoidance of doubt a skilled person will appreciate that not all the end groups need to be derived from terephthalic acid.

It is preferred that the polyester further comprises recycled PET containing isophthalic acid moieties.

For the avoidance of doubt it is noted that if the polyester comprises a mixture of two or more different poly(ethylene terephthalates) that the mixture also has the above defined intrinsic viscosity of 0.4 to 2.0 g/dl, preferably 0.8 - 1.6 dl/g.

Nucleating agents

The composition disclosed herein may comprise one or more nucleating agents. In that respect, the term nucleating agent refers to an additive that enhances the formation of crystals in the polyester phase of the composition. Addition of a nucleating agent will accordingly increase the crystallinity of the polyester phase, which results in an increased heat resistance.

Typically, a nucleating agent is added during compounding of a PC/PET composition. In a preferred embodiment of the invention however, the nucleating agent is added in-situ during the polymerization of the poly(ethylene terephthalate), instead of during compounding.

The composition preferably comprises from 0.01 to 5 wt.% by weight, preferably from 0.02 to 1 wt.% and particularly preferably from 0.05 to 0.3 wt.%, of nucleating agent(s).

Typical nucleating agents for PET are known to a skilled person and include in particular sodium acetate and talc.

Impact modifiers

The composition of the invention preferably comprises an impact modifier. There is no restriction on the type of impact modifier and any material commonly used in PC - PET compositions may be used.

Suitable impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of impact modifiers can be used.

The impact modifier is preferably selected from the group consisting of ethylene-vinyl acetate copolymer, ethylene-methyl-acrylate copolymer, ethylene-ethyl acrylate copolymer, ethylene-butyl acrylate copolymer, low density polyethylene, maleic anhydride grafted ethylene-octene copolymer, ethylene-ethyl acrylate-glycidyl ester copolymer, ethylene-butyl acrylate-glycidyl ester copolymer, rubber modified styrene-acrylonitrile copolymer, rubber modified styrene-acrylonitrile-methyl methacrylate copolymer, styrene-acrylonitrile copolymer and combinations of at least two of the foregoing (co)polymers.

The amount of impact modifier may be from 0 - 10 wt.% based on the weight of the composition. Preferably the impact modifier is comprised in the composition in an amount of from 1 - 10 wt.%, preferably from 1 - 8 wt.% or from 2 - 7 wt.% more preferably from 3 - 5 wt.%.

Other additives

Typical additives that are used in the composition can comprise one or more of a flow modifier, filler, reinforcing agent (e.g., glass fibers or glass flakes), antioxidant, heat stabilizer, light stabilizer, UV light stabilizer and/or UV absorbing additive, plasticizer, lubricant, release agent, in particular glycerol monostearate, pentaerythritol tetra stearate, glycerol tristearate, stearyl stearate, antistatic agent, antifog agent, antimicrobial agent, colorant (e.g., a dye or pigment), flame retardant either or not combined with an anti-drip agent such as polytetrafluoroethylene (PTFE) or PTFE-5 encapsulated styrene-acrylonitrile copolymer.

The compositions can be manufactured by various methods known in the art. For example, polycarbonate, polyester, and other components are first blended, optionally with any fillers or additives, in a high speed mixer or by hand mixing. The blend is then fed into the throat of a twin-screw extruder via a hopper. Alternatively, at least one of the components can be incorporated into the composition by feeding it directly into the extruder at the throat and/or downstream through a side feeder, or by being compounded into a masterbatch with a desired polymer and fed into the extruder. The extruder may be operated with barrel temperatures between 150°C and 260°C. The extrudate can be immediately cooled in a water bath and pelletized. The pellets so prepared can be one-fourth inch long or less as desired. Such pellets can be used for subsequent molding, shaping, or forming.

Shaped, formed, or molded articles comprising the compositions are also provided. The compositions can be molded into articles by a variety of methods, such as injection molding, extrusion, and thermoforming. Some example of articles include automotive and vehicular body panels such as bumper covers and bumpers or a housing for electrical equipment.

Accordingly, the present invention relates to an article comprising or consisting of the composition disclosed herein. More in particular, the present invention relates to vehicular body parts or for housing of electrical equipment comprising or consisting the composition disclosed herein. Likewise, the present invention relates to a vehicle or an electrical equipment comprising said vehicular body part or said housing. The present invention relates to the use of the composition disclosed herein for the manufacture of an article of manufacture, such as an automotive part. The present invention further relates to the use as defined in claims 14 and 15.

Composition

It is preferred that the composition disclosed herein comprises from 20 - 80 wt.% of polycarbonate and from 80 - 20 wt.% polyester based on the weight of the composition.

If is preferred that the polyester in the composition disclosed herein comprises at least 75 wt.%, preferably at least 90 wt.%, preferably at least 99 wt.% of poly(ethylene terephthalate) that is substantially free of isophthalic acid moieties.

In an aspect, it is preferred that the polyester consists of poly(ethylene terephthalate) that is substantially free of isophthalic acid moieties.

In accordance with the invention the composition as disclosed herein has a Vicat softening point, as determined by ISO-306 B120 at a load of 50N and a speed of 120°C/hr that is higher than the Vicat softening point of an otherwise identical composition wherein the poly(ethylene terephthalate) component contains isophthalic acid moieties. For the avoidance of doubt, the term "otherwise identical" means only the indicated material, in this case the poly(ethylene terephthalate) is different in terms of the presence of isophthalic acid moieties. All other materials of the composition and their respective amounts are identical. Further to this an otherwise identical PET means that the polyethylene terephthalate not containing isophthalic acid moieties differs at most 5% in intrinsic viscosity from isophthalic acid moieties containing polyethylene terephthalate.

The present invention will now be further elucidated based on the following non-limiting examples.

Test Methods

| | |
|---|---|
| Impact | Notched Izod impact (NII) properties were determined in accordance with to ISO 180/1A on injection molded samples being 64 x 12.7 x 3.2 mm in size. The test was carried out at 23°C, -20°C and -30°C. The impact energy is expressed in J/m. Impact strength is calculated by dividing impact energy in J by the thickness of the specimen. The test result is the average of 5 specimens. |
| Intrinsic viscosity | The intrinsic viscosity of the polyesters was measured in a 3:2 weight to weight mixture of phenol:1,2-dichlorobenzene at 25°C. |
| Vicat softening temperature | The Vicat softening point (in °C) was determined in accordance with ISO 306 at a load of 50N and a speed of 120°C/hr on injection molded samples. |
| Molecular weight | The molecular weight of the polycarbonate was measured by GPC method with polycarbonate standards in an Agilent 1260 Infinity (SYS-LC-1260) equipment with PLGel 5μm Minimix C 250 x4.6 mm column and Refractive Index detector. The sample is dissolved in dichloromethane and the same solvent is used as carrier. |
| Fries branching | The amount of Fries branching was determined using an Agilent 1100series HPLC equipped with a MWD G1365B detector. The column is an Agilent Zorbax Eclipse XDB-C18 4.6 x 75 mm. The injection volume is 50ml. The oven temperature is 35 °C and the wavelength to acquire data is 320.16 nm. For sample preparation 0.3g of sample is dissolved in 7.5 ml of a solvents mixture based on 5 ml of tetrahydrofuran and 2.5 ml of a 10 % of potassium hydroxide solution in methanol, after heating this sample at 40°C during 20 min, 1.4 ml of acetic acid is added. |
| End Cap Level | The endcap level was determined based on UV measurement to determine the amount of terminal OH groups. Combined with the number average molecular weight the endcap level is then determined in accordance with formula below.<br><br>$$\%EC = 100 - \left(\frac{ppmOH \times Mn}{340000}\right) \qquad \text{I}$$<br><br>wherein % EC is the endcap level, ppm OH is the amount of hydroxyl end groups in parts per million by weight and Mn is the number average molecular weight of the polycarbonate based on polycarbonate standards.<br>The UV spectrophotometer was a Perkin Elmer Lambda 800. Measurements were carried out on 0.01g of a polycarbonate sample diluted in 10 ml of dichloromethane and placed into a quartz cuvette of 10 mm of optical path. The wavelength to acquire data are 284 and 292 nm. The results from the equipment as ppm of OH are used to calculate the endcap using also the molecular weight of the polycarbonate and according to the formula for calculation as disclosed herein. |

(continued)

| Tensile modulus | The tensile modulus (in units of gigapascals; Gpa) and % nominal strain at break were tested according to ISO 527 measured at room temperature (23 deg C). |
| Tensile strength | Tensile strength (in units of megapascals: MPa) and % elongation were tested according to to ISO 527 measured at room temperature (23 degC). |
| Glass transition temperature ($T_g$) | Glass transition temperatures were determined by dual cantiliver three point bending dynamic rheology wherein the temperature was increased from 23 °C to 250 °C and frequency of 6.28 rad/-sec. |
| Melt volume rate (MVR) | The melt volume rate was determined in accordance with ASTM D1238. For polycarbonate, measurements were carried out at a temperature of 300°C and a load of 1.2 kg. For the compositions, measurements were carried out at a temperature of 250°C and a load of 5.0 kg. |

EXAMPLES

The examples were made by extruding on a WP 25 millimeter (mm) co-rotating intermeshing twin-screw extruder having L/D of 41. The components of the compositions and their source are listed in Table 1. All components were dry-mixed and added to the throat of the extruder. The extruder was set with barrel temperatures between 150°C and 260°C. The material was run maintaining torque of 55-60% with a vacuum of 100 millibar (mbar) - 800 mbar applied to the melt during compounding. The composition was pelletized after exiting the die head.

All samples were molded via injection molding with the molding machine set from 40 - 280°C and mold set at 100°C.

Table 1: Components of the compositions and their source

| PC1 | Bisphenol A polycarbonate manufactured using an interfacial process, having a melt volume rate of 6cc/10 min, and endcap level of about 100%, available from SABIC (PC 105) |
| PC2 | Bisphenol A polycarbonate manufactured using a melt transesterification process, having a melt volume rate of 6cc/10 min, and endcap level of 65% and a Fries branching level of 1100 ppm. available from SABIC ( PC 102L) |
| PET1 | Polyethylene terephthalate having an intrinsic viscosity of 0.76 dl/g as measured in a 3:2 weight to weight mixture of phenol:1,2-dichlorobenzene at 25°C containing 2wt.% isophathalic acid available from SABIC, ( BC 211) |
| PET2 | Polyethylene terephthalate having an intrinsic viscosity of 0.84 dl/g as measured in a 3:2 weight to weight mixture of phenol:1,2-dichlorobenzene at 25°C containing 1.85wt.% isophathalic acid available from SABIC ( BC 212) |
| PET3 | Polyethylene terephthalate having an intrinsic viscosity of 0.76 dl/g as measured in a 3:2 weight to weight mixture of phenol:1,2-dichlorobenzene at 25°C and without isophathalic acid |
| PET4 | Polyethylene terephthalate having an intrinsic viscosity of 0.84 dl/g as measured in a 3:2 weight to weight mixture of phenol:1,2-dichlorobenzene at 25°C and without isophathalic acid |
| PET5 | Polyethylene terephthalate having an intrinsic viscosity of 0.76 dl/g as measured in a 3:2 weight to weight mixture of phenol:1,2-dichlorobenzene at 25°C and without isophathalic acid containing *in-situ* 1wt% of Sodium acetate |
| PET6 | Polyethylene terephthalate having an intrinsic viscosity of 0.84 dl/g as measured in a 3:2 weight to weight mixture of phenol:1,2-dichlorobenzene at 25°C and without isophathalic acid containing *in-situ* 1wt% of Sodium acetate |
| IM1 | MBS core shell impact modifier commercially available from Dow, Singapore (Paralloid MBS EXL 2261) |
| Stab | Stabilizer - hindered phenol Antioxidant Irganox 1010 from BASF |
| Quench | Mono Zinc Phosphate quencher |
| Sod. Acet. | Sodium Acetate added externally, Ultra-pure from Sigma Aldrich |
| Iono1 | Surlyn PC100, commercially available from DuPont |

(continued)

| Nucl1 | Jetfine Talc 3CA having mean particle size ~ 1 micron-- from Imerys Clays |
|---|---|

COMPARATIVE EXAMPLES (CE 1-4) AND EXAMPLES (E 1-4): Table 2

Comparative Example 1 - 4 demonstrates the Vicat values and impact properties of a composition where the polycarbonate has been prepared by the interfacial process and the poly(ethylene terephthalate) contains 1.85 to 2 wt.% isophthalic acid. Examples 1 - 4 demonstrate the Vicat values and impact properties of a composition where the polycarbonate has been prepared by the interfacial process and the poly(ethylene terephthalate) does not contain isophthalic acid moieties. The amounts in Table 2 are in weight percent based on the total weight of the composition. In all the examples, the total amount of components, equals 100 weight percent. Table 2 shows that the composition comprising polycarbonate and poly(ethylene terephthalate), that is free of isophthalic acid moieties surprisingly shows improved heat resistance properties, without compromising on the impact properties as demonstrated by NII tests. When comparing CE1 and CE2 with E1 & E2, it is observed there is increase in heat (VST) by 3 - 5 °C resulting from the IPA free PET. IPA free PET helps in faster crystallization under subjected molding condition and hence we observe the enhancement in heat. Similarly, comparing CE3 & CE4 with E3 & E4 where the PET content is 50 wt. % the effect is more pronounced. Table 2: Formulations and properties for the PC - PET composition (in absence of nucleating agent), where the polycarbonate is an interfacial PC

| Components (wt. %) | CE1 | CE2 | CE3 | CE4 | E1 | E2 | E3 | E4 |
|---|---|---|---|---|---|---|---|---|
| PC1 | 59.87 | 59.87 | 39.87 | 39.87 | 59.87 | 59.87 | 39.87 | 39.87 |
| PET1 | 30.00 | | 50.00 | | | | | |
| PET2 | | 30.00 | | 50.00 | | | | |
| PET3 | | | | | 30.00 | | 50.00 | |
| PET4 | | | | | | 30.00 | | 50.00 |
| IM1 | 10.00 | 10.00 | 10.00 | 10.00 | 10.00 | 10.00 | 10.00 | 10.00 |
| Quench | 0.05 | 0.05 | 0.05 | 0.05 | 0.05 | 0.05 | 0.05 | 0.05 |
| Stab | 0.08 | 0.08 | 0.08 | 0.08 | 0.08 | 0.08 | 0.08 | 0.08 |
| Tensile Modulus (GPa) | 2.1 | 2.1 | 2.1 | 2.2 | 2.2 | 2.16 | 2.1 | 2.2 |
| Tensile Strength (MPa) | 52 | 52 | 52 | 52 | 56 | 60 | 52 | 52 |
| Elongation @ Break % | 127 | 129 | 280 | 146 | 210 | 225 | 240 | 140 |
| NII (J/m2) @ 23 °C | 69 | 69 | 44 | 63 | 81 | 66 | 18 | 59 |
| NII (J/m2) @ -20 °C | 51 | 49 | 10 | 15 | 22 | 60 | 9 | 14 |
| NII (J/m2) @ -30 °C | 31 | 34 | 8 | 14 | 20 | 54 | 8 | 13 |
| VST@ 120 °C/50 N | 132 | 131 | 94 | 96 | 135 | 136 | 109 | 105 |
| VST@ 50 °C/50 N | 133 | 132 | 91 | 85 | 133 | 135 | 108 | 98 |

COMPARATIVE EXAMPLES (CE 5-6) AND EXAMPLES (E 5-6): Table 3

Comparative Example 5 - 6 demonstrates the Vicat values and impact properties of a composition where the polycarbonate has been prepared by the melt process and the poly(ethylene terephthalate) contains 1.85 to 2 wt.% isophthalic acid. Examples 5 - 6 demonstrate the Vicat values and impact properties of a composition where the polycarbonate has been prepared by the melt process and the poly(ethylene terephthalate) does not contain isophthalic acid. The amounts in Table 3 are in weight percent based on the total weight of the composition. When comparing CE5 and CE6 with E5 and E6 respectively, it is similarly observed there is increase in heat (VST) resulting from the IPA free PET, even when the polycarbonate in the PC-PET composition is prepared by melt process.

Table 3: Formulations and properties for the PC - PET composition (in absence of nucleating agent), where the polycarbonate is a melt PC

| Components (wt. %) | CE5 | CE6 | E5 | E6 |
|---|---|---|---|---|
| PC2 | 59.87 | 39.87 | 59.87 | 39.87 |
| PET2 | 30.00 | 50.00 | | |
| PET4 | | | 30.00 | 50.00 |
| IM1 | 10.00 | 10.00 | 10.00 | 10.00 |
| Quench | 0.05 | 0.05 | 0.05 | 0.05 |
| Stab | 0.08 | 0.08 | 0.08 | 0.08 |
| Tensile Modulus (GPa) | 2.13 | 2.16 | 2.11 | 2.08 |
| Tensile Strength (MPa) | 55 | 51.6 | 55 | 52 |
| Elongation @ Break % | 120 | 152 | 125 | 140 |
| NII (J/m2) @ -23 °C | 57 | 13 | 60 | 1 |
| NII (J/m2) @ -20 °C | 31 | 12 | 44 | 12 |
| NII (J/m2) @ -30 °C | 27 | 10 | 30 | 9 |
| VST@ 120 °C/50N | 134 | 95 | 138 | 103 |

COMPARATIVE EXAMPLES (CE 7-8) AND EXAMPLES (E 7-8): Table 4

Comparative Example 7 - 8 demonstrates the properties of a composition where the polycarbonate has been prepared by the interfacial process, the poly(ethylene terephthalate) contains 1.85 to 2 wt.% isophthalic acid and the composition additionally contains 0.3% sodium acetate added externally during compounding. Examples 7 - 8 demonstrate the Vicat values and impact properties of a composition where the polycarbonate has been prepared by the interfacial process, the poly(ethylene terephthalate) does not contain isophthalic acid and the composition contains 0.3% sodium acetate that was added in situ during polymerization of PET.

Table 4: Formulations and properties for the PC - PET (in presence of sodium acetate as a nucleating agent - added externally vs. added in-situ)

| Components (wt. %) | CE1 | CE2 | CE7 | CE8 | E7 | E8 |
|---|---|---|---|---|---|---|
| PC1 | 59.87 | 59.87 | 59.57 | 59.57 | 59.57 | 59.57 |
| PET1 | 30.00 | | 30.00 | | | |
| PET2 | | 30.00 | | 30.00 | | |
| PET5 | | | | | 30.30 | |
| PET6 | | | | | | 30.30 |
| Sodium acetate | | | 0.30 | 0.30 | | |
| IM1 | 10.00 | 10.00 | 10.00 | 10.00 | 10.00 | 10.00 |
| Quench | 0.05 | 0.05 | 0.05 | 0.05 | 0.05 | 0.05 |
| Stab | 0.08 | 0.08 | 0.08 | 0.08 | 0.08 | 0.08 |

(continued)

| Components (wt. %) | CE1 | CE2 | CE7 | CE8 | | E7 | E8 |
|---|---|---|---|---|---|---|---|
| Tensile Modulus (GPa) | 2.1 | 2.1 | | | | 2.1 | 2.1 |
| Tensile Strength (MPa) | 52 | 52 | | | | 55 | 54 |
| Elongation @ Break % | 127 | 129 | | | | 139 | 140 |
| NII (J/m2) @ 23 °C | 69 | 69 | Could not be compounded due to degradation / foaming during extrusion | | | 58 | 60 |
| NII (J/m2) @ -20 °C | 51 | 49 | | | | 42 | 38 |
| NII (J/m2) @ -30 °C | 31 | 34 | | | | 22 | 22 |
| VST@ 120 °C/50N | 132 | 131 | | | | 136 | 136 |

It is found that CE7 and CE8 could not be compounded due to degradation / foaming during extrusion. However, in E7 and E8, where the sodium acetate has been added in-situ during polymerization of PET, such effect was not observed. Sodium acetate added in situ during polymerization of PET, gets neutralized in the presence of phosphoric acid (which is generated during PET polymerization) and therefore does not degrade the PC during extrusion. Sodium acetate added during compounding raises the pH of the composition, which degrades PC severely, and therefore the composition cannot be extruded. Comparing CE1 and CE2 to E7 and E8, we find that both the heat resistance and impact properties of the composition is preserved when sodium acetate has been added in-situ during polymerization of PET that does not contain isophthalic acid moieties.

Table 5: Formulations and properties for the PC - PET (in presence of different nucleating agents)

| Components (wt. %) | CE1 | CE2 | E7 | E8 | E9 | E10 | E11 | E12 |
|---|---|---|---|---|---|---|---|---|
| PC1 | 59.87 | 59.87 | 59.57 | 59.57 | 59.67 | 59.67 | 59.67 | 59.67 |
| PET1 | 30.00 | | | | | | | |
| PET2 | | 30.00 | | | 30.00 | | 30.00 | |
| PET5 | | | 30.30 | | | | | |
| PET6 | | | | 30.30 | | 30.00 | | 30.00 |
| Nucl1 | | | | | 0.20 | 0.20 | | |
| Iono1 | | | | | | | 0.20 | 0.20 |
| IM1 | 10.00 | 10.00 | 10.00 | 10.00 | 10.00 | 10.00 | 10.00 | 10.00 |
| Quench | 0.05 | 0.05 | 0.05 | 0.05 | 0.05 | 0.05 | 0.05 | 0.05 |
| Stab | 0.08 | 0.08 | 0.08 | 0.08 | 0.08 | 0.08 | 0.08 | 0.08 |
| Tensile Modulus (GPa) | 2.1 | 2.1 | 2.1 | 2.1 | 2.1 | 2.1 | 2 | 2 |
| Tensile Strength (MPa) | 52 | 52 | 55 | 54 | 55 | 59 | 54 | 58 |
| Elongation @ Break % | 127 | 129 | 139 | 140 | 125 | 148 | 130 | 146 |
| NII (J/m2) @ 23C | 69 | 69 | 58 | 60 | 32 | 48 | 84 | 54 |
| NII (J/m2) @ -20 °C | 51 | 49 | 42 | 38 | 8 | 43 | 47 | 44 |
| NII (J/m2) @ -30 °C | 31 | 34 | 22 | 22 | 7 | 25 | 55 | 23 |
| VST@ 120 °C/50N | 132 | 131 | 136 | 136 | 140 | 140 | 139 | 140 |
| Tg, °C | 148 | 148 | 148 | 148 | 148 | 148 | 148 | 148 |

Examples 9 - 10 demonstrate the Vicat values and impact properties of a composition where the polycarbonate has been prepared by the interfacial process, the poly(ethylene terephthalate) does not contain isophthalic acid and the composition contains 0.3% talc (Jetfine 3CA) as a nucleating agent, that was added during compounding the composition. Examples 11 - 12 demonstrate a similar composition that contains 0.3% ionomer (Surlyn PC100) as a nucleating agent, added during compounding the composition. It is found that in E9 and E10, the heat resistance property as demonstrated by VST value increases significantly when compared to CE1 and CE2, while the impact properties are not hampered.

However, for E11 and E12, though the heat resistance property as demonstrated by VST value increase significantly when compared to CE1 and CE2, the impact properties are compromised.

## Claims

1. A composition comprising polycarbonate and polyester wherein said polyester comprises poly(ethylene terephthalate) containing at most 0.01 wt.%, preferably at most 0.001 wt.%, most preferably 0.0001 wt.% of isophthalic acid moieties.

2. The composition of claim 1 wherein the polyester comprises at least 75 wt.%, preferably at least 90 wt.%, preferably at least 99 wt.% of poly(ethylene terephthalate) that is substantially free of isophthalic acid moieties.

3. The composition of claim 1 or 2 wherein the amount of polycarbonate is from 20 - 80 wt. % and the amount of polyester component is from 80 - 20 wt. % based on the weight of the composition.

4. The composition of any one or more of claims 1-3 wherein the polyester further comprises recycled poly(ethylene terephthalate) containing isophthalic acid moieties.

5. The composition of any one or more of claims 1-4 further comprising one or more nucleating agents.

6. The composition of any one or more of claims 1-5 wherein the nucleating agent is added "in-situ" during the polymerization of said poly(ethylene terephthalate) or said recycled poly(ethylene terephthalate).

7. The composition of any one or more of claims 1-6 wherein the polycarbonate has a weight average molecular weight of 15,000 to 60,000 g/mol determined using gel permeation chromatography with polycarbonate standards and/or wherein the poly(ethylene terephthalate) and/or the recycled poly(ethylene terephthalate) has an intrinsic viscosity of 0.4 to about 2.0 dl/g as measured in a 3:2 weight to weight mixture of phenol:1,2-dichlorobenzene at 25°C.

8. The composition of any one or more of claims 1-7 further comprising an impact modifier, preferably selected from the group consisting of ethylene-vinyl acetate copolymer, ethylene-methyl-acrylate copolymer, ethylene-ethyl acrylate copolymer, ethylene-butyl acrylate copolymer, low density polyethylene, maleic anhydride grafted ethylene-octene copolymer, ethylene-ethyl acrylate-glycidyl ester copolymer, ethylene-butyl acrylate-glycidyl ester copolymer, rubber modified styrene-acrylonitrile copolymer, rubber modified styrene-acrylonitrile-methyl methacrylate copolymer, styrene-acrylonitrile copolymer and combinations of at least two of the foregoing (co)polymers.

9. The composition of any one or more of claims 1-8 wherein the composition has a Vicat softening point, as determined by ISO-306 B120 at a load of 50N and a speed of 120°C/hr that is higher than the Vicat softening point of an otherwise identical composition wherein the poly(ethylene terephthalate) contains isophthalic acid moieties.

10. An article comprising or consisting of the composition of any one or more of claims 1-9.

11. The article of claim 10, wherein the article is a vehicular body part or a housing for electrical equipment.

12. A vehicle or an electrical equipment comprising the article of claim 11.

13. Use of a composition of any one or more of claims 1-9 for the manufacture of an article, preferably an automotive part.

14. Use of a composition comprising, polycarbonate and polyester comprising poly(ethylene terephthalate) that is substantially free of isophthalic acid moieties; for improving the heat stability, preferably the Vicat softening temperature of said composition when compared to an otherwise identical composition wherein the poly(ethylene terephthalate) component contains isophthalic acid groups, wherein the poly(ethylene terephthalate) that is substantially free of isophthalic acid moieties contains at most 0.01 wt.%, preferably at most 0.001 wt.%, more preferably at most 0.0001 wt.% of isophthalic acid moieties.

15. Use of poly(ethylene terephthalate) that is substantially free of isophthalic acid moieties for replacing an otherwise identical poly(ethylene terephthalate) in a composition comprising polycarbonate and poly(ethylene terephthalate) for improving the heat stability, preferably the Vicat softening temperature of said composition, wherein the poly(ethylene terephthalate) that is substantially free of isophthalic acid moieties contains at most 0.01 wt.%, preferably at most 0.001 wt.%, more preferably at most 0.0001 wt.% of isophthalic acid moieties.

**Patentansprüche**

1. Zusammensetzung, umfassend Polycarbonat und Polyester, wobei das Polyester Poly(ethylenterephthalat) umfasst, das höchstens 0,01 Gew.-%, vorzugsweise höchstens 0,001 Gew.-%, besonders bevorzugt 0,0001 Gew.-%, Isophthalsäure-Einheiten enthält.

2. Zusammensetzung nach Anspruch 1, wobei das Polyester mindestens 75 Gew.-%, vorzugsweise mindestens 90 Gew.-%, vorzugsweise mindestens 99 Gew.-% Poly(ethylenterephthalat) umfasst, das im Wesentlichen frei von Isophthalsäure-Einheiten ist.

3. Zusammensetzung nach Anspruch 1 oder 2, wobei die Menge an Polycarbonat von 20 bis 80 Gew.-% beträgt und die Menge an Polyester 80 - 20 Gew.-%, basierend auf dem Gewicht der Zusammensetzung, beträgt.

4. Zusammensetzung nach einem oder mehreren der Ansprüche 1-3, wobei das Polyester weiter recyceltes Poly(ethylenterephthalat) umfasst, das Isophthalsäure-Einheiten enthält.

5. Zusammensetzung eines oder mehreren der Ansprüche 1-4, weiter umfassend einen oder mehrere Keimbildner.

6. Zusammensetzung nach einem oder mehreren der Ansprüche 1-5, wobei der Keimbildner "in situ" während der Polymerisation des Poly(ethylenterephthalats) oder des recycelten Poly(ethylenterephthalats) zugegeben wird.

7. Zusammensetzung nach einem oder mehreren der Ansprüche 1-6, wobei das Polycarbonat ein gewichtsmittleres Molekulargewicht von 15.000 bis 60.000 g/mol aufweist, bestimmt unter Verwendung von Gelpermeationschromatographie mit Polycarbonatstandards, und/oder wobei das Poly(ethylenterephthalat) und/oder das recycelte Poly(ethylenterephthalat) eine intrinsische Viskosität von 0,4 bis etwa 2,0 dl/g aufweist, wie gemessen in einem Gewicht-Gewicht-Gemisch von 3:2 von Phenol: 1,2-Dichlorbenzol bei 25°C.

8. Zusammensetzung nach einem oder mehreren der Ansprüche 1-7, weiter umfassend einen Schlagzäh-Modifikator, vorzugsweise ausgewählt aus der Gruppe, bestehend aus Ethylen-Vinylacetat-Copolymer, Ethylen-Methylacrylat-Copolymer, Ethylen-Ethylacrylat-Copolymer, Ethylen-Butylacrylat-Copolymer, Polyethylen niedriger Dichte, maleinsäureanhydrid-gepfropftem Ethylen-Octen-Copolymer, Ethylen-Ethylacrylat-Glycidylester-Copolymer, Ethylen-Butylacrylat-Glycidylester-Copolymer, kautschukmodifiziertem Styrol-Acrylnitril-Copolymer, kautschukmodifiziertem Styrol-Acrylnitril-Methylmethacrylat-Copolymer, Styrol-Acrylnitril-Copolymer und Kombinationen von mindestens zwei der vorstehenden (Co-)Polymere.

9. Zusammensetzung nach einem oder mehreren der Ansprüche 1-8, wobei die Zusammensetzung einen Vicat-Erweichungspunkt aufweist, wie durch ISO 306 B120 bei einer Last von 50 N und einer Geschwindigkeit von 120°C/h bestimmt, der höher ist als der Vicat-Erweichungspunkt einer ansonsten identischen Zusammensetzung, wobei das (Polyethylenterephthalat) Isophthalsäure-Einheiten enthält.

10. Artikel, der die Zusammensetzung nach einem oder mehreren der Ansprüche 1-9 umfasst oder daraus besteht.

11. Artikel nach Anspruch 10, wobei der Artikel ein Fahrzeug-Karosserieteil oder ein Gehäuse für elektrische Ausrüstung ist.

12. Fahrzeug oder elektrische Ausrüstung, umfassend den Artikel nach Anspruch 11.

13. Verwendung einer Zusammensetzung nach einem oder mehreren der Ansprüche 1-9 zur Herstellung eines Artikels, vorzugsweise eines Automobilteils.

14. Verwendung einer Zusammensetzung, umfassend Polycarbonat und Polyester, das Poly(ethylenterephthalat) umfasst, das im Wesentlichen frei von Isophthalsäure-Einheiten ist; zum Verbessern der Wärmebeständigkeit, vorzugsweise der Vicat-Erweichungstemperatur der Zusammensetzung im Vergleich zu einer ansonsten identischen Zusammensetzung, wobei die Poly(ethylenterephthalat)-Komponente Isophthalsäure-Gruppen enthält, wobei das Poly(ethylenterephthalat), das im Wesentlichen frei von Isophthalsäure-Einheiten ist, höchstens 0,01 Gew.-%, vorzugsweise höchstens 0,001 Gew.-%, bevorzugter höchstens 0,0001 Gew.-%, Isophthalsäure-Einheiten enthält.

15. Verwendung von Poly(ethylenterephthalat), das im Wesentlichen frei von Isophthalsäure-Einheiten ist, zum Ersatz von ansonsten identischem Poly(ethylenterephthalat) in einer Polycarbonat und Poly(ethylenterephthalat) umfassenden Zusammensetzung zum Verbessern der Wärmestabilität, vorzugsweise der Vicat-Erweichungstemperatur der Zusammensetzung, wobei das Poly(ethylenterephthalat), das im Wesentlichen frei von Isophthalsäure-Einheiten ist, höchstens 0,01 Gew.-%, vorzugsweise höchstens 0,001 Gew.-%, bevorzugter höchstens 0,0001 Gew.-%, Isophthalsäure-Einheiten enthält.

**Revendications**

1. Composition comprenant du polycarbonate et du polyester dans laquelle ledit polyester comprend du poly(téréphtalate d'éthylène) contenant au maximum 0,01 % en poids, préférentiellement au maximum 0,001 % en poids, le plus préférentiellement 0,0001 % en poids de fragments d'acide isophtalique.

2. Composition selon la revendication 1 dans laquelle le polyester comprend au moins 75 % en poids, préférentiellement au moins 90 % en poids, préférentiellement au moins 99 % en poids de poly(téréphtalate d'éthylène) qui est sensiblement exempt de fragments d'acide isophtalique.

3. Composition selon la revendication 1 ou 2 dans laquelle la quantité de polycarbonate est de 20 à 80 % en poids et la quantité de constituant polyester est de 80 à 20 % en poids sur la base du poids de la composition.

4. Composition selon l'une quelconque ou plusieurs des revendications 1-3 dans laquelle le polyester comprend en outre du poly(téréphtalate d'éthylène) recyclé contenant des fragments d'acide isophtalique.

5. Composition selon l'une quelconque ou plusieurs des revendications 1-4 comprenant en outre un ou plusieurs agents de nucléation.

6. Composition selon l'une quelconque ou plusieurs des revendications 1-5 dans laquelle l'agent de nucléation est ajouté « in situ » pendant la polymérisation dudit poly(téréphtalate d'éthylène) ou dudit poly(téréphtalate d'éthylène) recyclé.

7. Composition selon l'une quelconque ou plusieurs des revendications 1-6 dans laquelle le polycarbonate présente une masse moléculaire moyenne en poids de 15 000 à 60 000 g/mol déterminée par chromatographie par perméation de gel avec des étalons de polycarbonate et/ou dans laquelle le poly(téréphtalate d'éthylène) et/ou le poly(téréphtalate d'éthylène) recyclé présente une viscosité intrinsèque de 0,4 à environ 2,0 dl/g telle que mesurée dans un mélange poids à poids 3:2 de phénol:1,2-dichlorobenzène à 25 °C.

8. Composition selon l'une quelconque ou plusieurs des revendications 1-7 comprenant en outre un modificateur d'impact, préférentiellement choisi dans le groupe constitué de copolymère d'éthylène-acétate de vinyle, de copolymère d'éthylène-acrylate de méthyle, de copolymère d'éthylène-acrylate d'éthyle, de copolymère d'éthylène-acrylate de butyle, de polyéthylène basse densité, de copolymère d'éthylène-octène greffé à l'anhydride maléique, de copolymère d'éthylène-acrylate d'éthyle-ester glycidylique, de copolymère d'éthylène-acrylate de butyle-ester glycidylique, de copolymère de styrène-acrylonitrile modifié par du caoutchouc, de copolymère de styrène-acrylonitrile-méthacrylate de méthyle modifié par du caoutchouc, de copolymère de styrène-acrylonitrile et de combinaisons d'au moins deux des (co)polymères précités.

9. Composition selon l'une quelconque ou plusieurs des revendications 1-8 dans laquelle la composition présente un point de ramollissement Vicat, tel que déterminé par ISO-306 B120 sous une charge de 50 N et à une vitesse de 120 °C/h, qui est supérieur au point de ramollissement Vicat d'une composition par ailleurs identique dans laquelle le poly(téréphtalate d'éthylène) contient des fragments d'acide isophtalique.

10. Article comprenant ou constitué de la composition selon l'une quelconque ou plusieurs des revendications 1-9.

11. Article selon la revendication 10, dans lequel l'article est une pièce de carrosserie de véhicule ou un boîtier pour un équipement électrique.

12. Véhicule ou équipement électrique comprenant l'article selon la revendication 11.

13. Utilisation d'une composition selon l'une quelconque ou plusieurs des revendications 1-9 pour la fabrication d'un article, préférentiellement une pièce automobile.

14. Utilisation d'une composition comprenant du polycarbonate et du polyester comprenant du poly(téréphtalate d'éthylène) qui est sensiblement exempt de fragments d'acide isophtalique ; pour améliorer la stabilité thermique, préférentiellement la température de ramollissement Vicat de ladite composition par rapport à une composition par ailleurs identique dans laquelle le constituant poly(téréphtalate d'éthylène) contient des groupes d'acide isophtalique, dans laquelle le poly(téréphtalate d'éthylène) qui est sensiblement exempt de fragments d'acide isophtalique contient au maximum 0,01 % en poids, préférentiellement au maximum 0,001 % en poids, plus préférentiellement au maximum 0,0001 % en poids de fragments d'acide isophtalique.

15. Utilisation de poly(téréphtalate d'éthylène) qui est sensiblement exempt de fragments d'acide isophtalique pour remplacer un poly(téréphtalate d'éthylène) par ailleurs identique dans une composition comprenant du polycarbonate et du poly(téréphtalate d'éthylène) afin d'améliorer la stabilité thermique, préférentiellement la température de ramollissement Vicat de ladite composition, dans laquelle le poly(téréphtalate d'éthylène) qui est sensiblement exempt de fragments d'acide isophtalique contient au maximum 0,01 % en poids, préférentiellement au maximum 0,001 % en poids, plus préférentiellement au maximum 0,0001 % en poids de fragments d'acide isophtalique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012129989 A
- KR 101772757 B1
- CN 107488342 B
- WO 0134703 A
- US 8969433 B